# EUROPÄISCHE PATENTSCHRIFT

(11) **EP 2 072 733 B1**
(45) Veröffentlichungstag und Bekanntmachung des Hinweises auf die Patenterteilung: **16.03.2011**
(21) Anmeldenummer: 08405308.1
(22) Anmeldetag: 18.12.2008
(51) Int. Cl.: E05F 1/10, B62D 47/02, B62D 31/02, B62D 65/02

(54) **Seitenverkleidung für ein Fahrzeug**
Side cladding for a vehicle
Habillage latéral pour un véhicule

(30) Priorität: 21.12.2007 CH 19932007
(43) Veröffentlichungstag der Anmeldung: 24.06.2009
(73) Patentinhaber: Carrosserie Hess AG, 4512 Bellach (CH)
(72) Erfinder: Naef, Max, 4512 Bellach (CH); Naef, Alex, 4512 Bellach (CH)
(74) Vertreter: Rüfenacht, Philipp Michael

(56) Entgegenhaltungen:
- DE-A1- 2 722 009
- DE-A1- 3 448 054
- DE-A1- 19 921 927
- US-A- 1 345 261
- US-A- 2 507 965

## Beschreibung

### Technisches Gebiet

Die Erfindung betrifft eine modular austauschbare Seitenverkleidung für ein Fahrzeug, insbesondere für einen Omnibus, umfassend eine verschwenkbare Deckplatte, welche mittels einer oberen und einer unteren Befestigung mit einem Fahrzeugrahmen verbunden ist, wobei die obere Befestigung ein Gelenk, insbesondere ein Foliengelenk, umfasst und weiter eine Feststellvorrichtung des Gelenks vorhanden ist und die untere Befestigung eine lösbare Arretiervorrichtung umfasst, wobei die Deckplatte in einer geschlossenen Position von der oberen und der unteren Befestigung gehalten ist.

### Stand der Technik

Strassenfahrzeuge, wie Omnibusse, und zum Teil auch Schienenfahrzeuge werden heute häufig auf einem Rahmenaufbau als Plattform aufgebaut. Ästhetik, Sicherheit und Wirtschaftlichkeit des Fahrzeugs stellen dabei die wesentlichen Anforderungen an das Fahrzeug dar. Unter dem Markennamen CO-BOLT ® sind aus Aluminium gefertigte Rahmenaufbau für Busse erhältlich, die sich aus einzelnen Modulen zusammensetzen. Die Module bestehen dabei aus Längs- und Querstreben und einem Aussenrahmen, an welchem Bodenplanken und ein Dach befestigbar sind. An den Längs- und Querstreben des Aufbaus werden unter Anderem grosse Fenster befestigt, welche den Passagieren einen möglichst freien Rundumblick ermöglichen. Diese grossen Fenster sind üblicherweise so seitlich nebeneinander angebracht, dass sie oben und unten je entlang einer Linie abschliessen. Unterhalb der unteren Glaslinie schliesst sich üblicherweise eine Seitenverkleidung an, die fest auf dem Fahrzeugrahmen befestigt ist, beispielsweise durch Nieten oder Schrauben. Es gibt auch Seitenverkleidungen, welche aus öffenbaren bzw. austauschbaren Teilen, beispielsweise aus Klappen, bestehen. Dabei sollen die Seitenverkleidung und die Fensterfront eine glatte Ebene bilden und möglichst nahtlos aneinander anschliessen, um auch eine ästhetisch ansprechende Gestaltung der Seitenfläche eines Busses zu erreichen. Fenster und fest befestigte Seitenverkleidungsteile können beispielsweise direkt an den Streben des Rahmenaufbaus angebracht werden.

Das CO-BOLT ® System beschreibt dabei einen Aluminium-Fahrzeugrahmen mit Quer- und Längsträgern mit mindestens einer hinterschnittenen Rinne, die als Halterung von gegenseitigen Befestigungen der Rahmenteile bzw. von Fahrzeugkomponenten am Fahrzeugrahmen dient und ist beispielsweise im Europäischen Patent EP Nr. 0 186 625 beschrieben.

Öffenbare Klappen haben den Vorteil, dass durch die Klappen verdeckte Teile des Fahrzeugs, beispielsweise Teile des Motors oder elektrische Komponenten von aussen leicht zugänglich sind (beispielsweise zu Wartungszwecken). Im Fall einer Beschädigung der Seitenverkleidung, beispielsweise durch eine Streifkollision, erlauben austauschbare Module der Seitenverkleidung zudem eine besonders kostengünstige Reparatur des Fahrzeugs. Das Öffnen solcher Seitenverkleidungen geschieht meistens derart, dass Klappen, die häufig an einem oberen Gelenk schwenkbar befestigt sind, gegebenenfalls durch Unterstützung von Gasdruckfedern aufgeklappt werden können. Die Klappen werden häufig auch durch die Gasdruckfedern offen gehalten. Das Gelenk mit dem die Klappe am Fahrzeugrahmen befestigt ist, kann dabei ein einfaches Scharnier oder auch ein Foliengelenk sein, wobei ein Foliengelenk durch eine elastische, oft gummiartige Verbindung zwischen den gegeneinander verschwenkbaren Teilen gebildet wird.

Das CO-BOLT ® System sowie auch andere ähnliche Rahmenaufbauten werden als leichter Fahrzeugrahmen eingesetzt, der die Grundlage für eine dünnwandige und trotzdem stabile Karosserie bildet. Die Stabilität des Rahmenaufbaus erfordert dabei eine Mindestanzahl von Längs- und Querstreben. Um einen Fensterbereich von Rahmenelementen weitgehend frei zu halten, haben horizontale Rahmenelemente dabei an der bzw. unterhalb der unteren Glaslinie zu verlaufen. Zudem soll die Wandstärke der Seitenwände eines Omnibusses möglichst klein sein, um einerseits ausreichend Raum in der Fahrgastzelle des Busses zu erlangen und andererseits die äusseren Abmessungen des Fahrzeugs möglichst kompakt zu halten. Eine Integration der bekannten Klappen mit Gasdruckfedern in die beschriebenen Fahrzeugrahmen ist aus verschiedenen Gründen problematisch. Zum einen müssen meist zusätzliche bauliche Massnahmen am Fahrzeugrahmen getroffen werden. Insbesondere haben Gasdruckfedern eine gewisse Mindestbauhöhe in vertikaler Richtung aufzuweisen, welche beispielsweise ein Unterbrechen horizontaler Rahmenteile des Aufbaus erforderlich macht. Auch die erforderliche Bautiefe derartiger Systeme ist vergleichsweise gross, sodass die platzsparenden Vorteile einer dünnwandigen Rahmen-Bauweise nicht in vollem Ausmass genutzt werden können.

Die gattungsbildende DE 34 48 054 A (Donkov) beschreibt eine Seitenverkleidung für Omnibusse in der Form einer Kofferraumklappe aus einer Verbundklappe mit einem Gummibandscharnier. Dabei ist ein Strangpressprofil mit dem Gummiband formschlüssig am Rand der Verbundplatte befestigt. Die Kofferraumklappe kann am Gummibandscharnier an einem entsprechenden Strangpressprofil ebenfalls formschlüssig befestigt sein.

Insbesondere haben bei bekannten Seitenverkleidungen die öffenbaren Klappen typischerweise an der Innenseite der Klappe angebrachte Versteifungselemente bzw. Versteifungsleisten aufzuweisen, um beispielsweise bei einseitiger Belastung ein Verwinden der Klappen beim Schliessen gegen die vergleichsweise grossen Kräfte der Gasdruckfedern zu verhindern. Dies führt zu dauerhafter Verformung, was sowohl aus ästhetischen als auch aus Sicherheitsgründen unerwünscht ist. Klappen aus einem stärkeren Material oder von einer grösseren Materialstärke sollten aus Gewichtsgründen vermieden werden. Derartige Versteifungen bedingen jedoch zugehörige Aufnahmen bzw. Freiräume im Fahrzeugrahmen (welche gegebenenfalls durch zusätzliche bauliche Massnahmen geschaffen werden müssen), in welchen die Versteifungen bei geschlossenen Klappen untergebracht werden können. Alternativ können die Klappen mit Versteifung vom Fahrzeugrahmen abgehoben montiert sein, was jedoch der Anforderung einer möglichst dünnwandigen Bauweise der Karosserie entgegenstünde.

### Darstellung der Erfindung

Aufgabe der Erfindung ist es daher, eine dem eingangs genannten technischen Gebiet zugehörende Seitenverkleidung zu schaffen, welche einfach auswechselbar ist und für eine Anwendung bei Fahrzeugrahmen geeignet ist.

Die Lösung der Aufgabe ist durch die Merkmale des Anspruchs 1 definiert. Gemäss der Erfindung umfasst die Feststellvorrichtung einen an der Deckplatte angebrachten Hebel mit einem daran angelenkten Federbügel, wobei Hebel und Bügel zusammen ein Gelenkknie bilden. Weiter ist eine Federrast vorhanden, wobei das Gelenkknie und die Federrast derart ausgeführt und positioniert sind, dass sich das Gelenkknie bei in einen vorgegebenen Winkel verschwenkter Deckplatte hinter einem Totpunkt befindet und dabei der Federbügel in der Federrast verrastet ist, sodass die Deckplatte im vorgegebenen Winkel festgestellt ist.

Die Deckplatte kann dabei aus verschiedensten Materialien gefertigt sein, beispielsweise aus Metall in Form eines Blechs, aus Kunststoff oder Verbundwerkstoffen. Neben einer planaren Ausgestaltung der Deckplatte kann diese noch viele andere Formen aufweisen, beispielsweise gekrümmt sein.

Der Totpunkt eines Gelenkknies bezeichnet dabei eine Winkelstellung, in der die beiden Schenkel des Gelenks im Wesentlichen parallel zueinander stehen. Im Ruhezustand liegen die Wirkungslinien der auf das Gelenkknie wirkenden statischen Kräfte aufeinander, wenn sich das Gelenkknie im Totpunkt befindet. Im Totpunkt des Gelenkknies wirken daher alle Kräfte am Gelenkknie nahezu ausschliesslich radial auf den Drehpunkt des Gelenks und sind sich paarweise entgegengerichtet.

Die Deckplatten der Seitenverkleidung können dabei alle tragenden Fahrzeugrahmenelemente über die gesamte Länge des Fahrzeugs abdecken.

Die erfindungsgemässe Feststellvorrichtung ermöglicht eine öffenbare Seitenverkleidung mit einer besonders niedrigen Einbautiefe. Die Feststellvorrichtung umgeht eine Verwendung von Gasdruckzylindern, welche für eine Anwendung in besonders flachen Fahrzeugrahmen aufgrund ihres grossen Platzbedarfs wenig geeignet sind. Dagegen kann die Feststellvorrichtung der erfindungsgemässen Seitenverkleidung besonders platzsparend ausgebildet sein, insbesondere nur etwa ein Drittel oder halb so lang wie eine entsprechende Gasdruckfeder. Auch die weiteren Elemente der Seitenverkleidung sind derart ausgebildet, dass eine möglichst geringe Bautiefe bei einfacher Konstruktion erreicht wird. Insbesondere lassen sich sämtliche Elemente neben der Deckplatte der Seitenverkleidung hinter der Deckplatte verborgen im Rahmen des Aufbaus unterbringen, ohne an einer Fahrzeuginnenseite oder-aussenseite über den Rahmen hervorzustehen.

Somit ist diese besonders einfach ausgebildete, platzsparende Seitenverkleidung gesamthaft besonderes geeignet für eine Anwendung bei Rahmenaufbauten, insbesondere bei besonders dünnwandigen Rahmenkonstruktionen wie es beispielsweise mit dem kommerziell erhältlichen System der Marke CO-BOLT ® (Carrosserie Hess AG, Schweiz) hergestellt werden kann.

Da erfindungsgemäss auf die Verwendung von Gasdruckzylindern gänzlich verzichtet wird, sind auch die mechanischen Belastungen beim Öffnen oder Schliessen der Deckplatte, welche bei herkömmlichen Systemen von einem Gasdruckzylinder auf die Deckplatte ausgeübt werden, deutlich geringer. Daher lässt sich die Deckplatte besonders dünn und leicht ausführen, ohne dabei auf zusätzliche Versteifungselemente angewiesen zu sein. Die Deckplatte muss im Wesentlichen nur selbsttragend sein und keine zusätzlichen Kräfte beispielsweise von Gasdruckfedern aufnehmen können.

Da erfindungsgemäss auf Versteifungselemente gänzlich verzichtet werden kann, kann die Deckplatte im Wesentlichen direkt am Fahrzeugrahmen anliegen bzw. in vergleichsweise geringem Abstand zu diesem montiert sein. Die erfindungsgemässe Seitenverkleidung trägt dabei im Wesentlichen nur gemäss der Dicke der Deckplatte zu einer Aussendimension des Rahmenaufbaus bei, d. h. trägt beispielsweise nur im Millimeterbereich auf den Rahmen auf. Damit ist es möglich, dass die Aussenfläche der Deckplatte glatt in eine Aussenfläche der Seitenverglasung der Fahrzeugseite übergeht, ohne grosse Einbussen im Volumen des Innenraums hinnehmen zu müssen. Insbesondere weist die gesamte Fahrzeugseite damit keine Vorsprünge auf und kann glatt und gleichmässig ausgebildet sein. Dabei sind auch sämtliche Rahmenteile des Aufbaus weitgehend von der Seitenverkleidung bzw. von der Seitenverglasung verdeckt.

So wird einerseits eine ästhetische und andererseits eine sichere Seitenverkleidung ermöglicht: Da keine einzelnen Scharniere aus der Seitenverkleidung herausstehen und die Module der Seitenverkleidung eine glatte Ebene bilden, wird das Verletzungsrisiko für andere Verkehrsteilnehmer, beispielsweise für Fussgänger oder Fahrradfahrer, möglichst gering gehalten.

Zudem ermöglicht der modulare Aufbau der Seitenverkleidung, insofern einzelne Deckplatten der Seitenverkleidung unabhängig voneinander ausgetauscht werden können, eine besonders kostengünstige Reparatur des Fahrzeugs nach einer Beschädigung einer einzelnen oder mehrerer Klappen.

Indem die Seitenverkleidung öffenbare Deckplatten umfasst, ist es zudem möglich, hinter der Seitenverkleidung befindliche Elemente, beispielsweise Motorteile oder Teile der Bordelektrik von aussen leicht zu erreichen. Dies erleichtert auch Austausch oder Reparaturen von im Fahrzeug, also hinter der Seitenverkleidung, befindlichen Elementen.

Mit Vorteil weist der Hebel eine Sollbruchstelle auf. Der Hebel, welcher als Teil der Feststellvorrichtung des Gelenks via den Federbügel mit der Federrast zusammenwirkt, kann auch als solcher derart ausgeführt sein, dass er bei einer hohen, nicht vorgesehenen Belastung der Feststellvorrichtung vor dem Federbügel und der Federrast, also bei einer niedrigeren Belastung als der Federbügel und die Federrast, bricht. Insbesondere wird damit erreicht, dass andere Elemente der Feststellvorrichtung und/oder des Gelenks bei einer Überbelastung vor Beschädigung geschützt sind. In dieser bevorzugten Ausführungsform ist der Hebel als Verschleissteil vorgesehen, welches leicht auswechselbar ist. Als leicht auswechselbares Verschleissteil verursacht der Hebel keine hohen Kosten, wenn er bricht, und eignet sich daher besonders als vorgesehenes schwächstes Element der Feststellvorrichtung, d. h. als Sollbruchstelle. Dabei ist unbeachtlich, ob der Hebel eine explizite Sollbruchstelle umfasst oder ob der Hebel als solcher gesamthaft so konstruiert ist, dass er bereits bei niedrigeren Belastungen als die übrigen Teile der Feststellvorrichtung bricht.

Es ist auch möglich, dass der Hebel keine solche Sollbruchstelle aufweist, und auf eine Ausführung des Hebels als im Vergleich mit anderen Elementen leichter brechendes Verschleissteil kann auch verzichtet werden.

Bevorzugt sind der Hebel oder die Federrast oder beide Elemente aus Kunststoff gefertigt. Kunststoffe zeichnen sich insbesondere durch wirtschaftliche Fertigung und niedrige Kosten aus. Sie können in ihrer Stabilität weitgehend durch ihre Materialzusammensetzung und Herstellungsparameter eingestellt werden. Somit ist es möglich, die Elemente mit bestimmten Festigkeiten zu produzieren. In grossen Mengen lassen sich Kunststoffteile zudem besonders günstig herstellen.

Der Hebel oder die Federrast oder beide Elemente können auch aus einem anderen Material als aus Kunststoff gefertigt sein. Es ist beispielsweise möglich, diese Teile aus Metall zu fertigen.

In einer bevorzugten Ausführungsform ist der Hebel über eine Schwalbenschwanzführung auf der Deckplatte angebracht. Die Schiene der Schwalbenschwanzführung kann dabei auf der Deckplatte befestigt, beispielsweise aufgeklebt sein und verläuft bevorzugt im Wesentlichen horizontal entlang der Deckplatte. Der Hebel ist dann bevorzugt derart ausgeführt, dass er einen Fuss umfasst, welcher als Feder in die schwalbenschwanzförmige Schiene einschiebbar ist. Damit ist der Hebel nur längs der Schwalbenschwanzführung verschiebbar und ansonsten fest auf der Deckplatte befestigt. Durch das leichte Verschieben des Hebels auf der Deckplatte ist dieser besonders einfach auszutauschen, ohne dass eigene Klebeverbindungen oder ähnliche Befestigungen gelöst werden müssten.

Alternativ und zusätzlich kann der Hebel durch andere Befestigungsmittel auf der Deckplatte angebracht sein. Beispielsweise kann der Hebel durch Arretierungsstifte in der Schwalbenschwanzführung gegen ein Verschieben längs der Führung gesichert sein. Es ist beispielsweise auch denkbar, dass der Hebel direkt auf die Deckplatte aufgeklebt, aufgenietet oder aufgeschraubt wird.

Mit Vorteil ist die Federrast unmittelbar am Fahrzeugrahmen, beispielsweise an einem CO-BOLT ® Rahmensystem, befestigt. Die Federrast ist dabei derart an Quer- oder Längsstreben des Fahrzeugrahmens angebracht, dass der Federbügel in sie einrastet, sobald sich das Gelenkknie in einer vorgegebenen Winkelposition befindet. Die Position der Federrast längs einer der Quer- oder Längsstreben ist dabei einstellbar. Die Federrast kann am Fahrzeugrahmen durch eine Vielzahl von Befestigungsmitteln angebracht bzw. verankert werden. Sie kann beispielsweise an die Streben angeschraubt, aufgenietet, angeklebt oder angebunden werden. Es ist auch denkbar, dass bestimmte Quer- oder Längsstreben bereits eine Federrast als integralen Bestandteil enthalten.

Alternativ kann die Federrast auch indirekt am Fahrzeugrahmen befestigt sein. Beispielsweise ist es denkbar, dass die Federrast an einem anderen Teil der Seitenverkleidung wie einer benachbarten, nicht aufklappbaren Deckplatte oder über ein Zwischenstück an einer der Quer- oder Längsstreben befestigt ist.

In einer bevorzugten Ausführungsform umfasst die Arretiervorrichtung ein Federschloss, wobei das Federschloss ein am Fahrzeugrahmen angebrachtes Federelement und ein an der Deckplatte angebrachtes Rastelement aufweist. Das Federelement wirkt dabei wie eine Sperrfeder mit dem Rastelement zusammen, derart, dass das Schloss durch die Federkraft geschlossen gehalten wird und zum Öffnen des Schlosses eine der Federkraft entgegenwirkende Kraft aufzubringen ist. Das Federelement kann dabei bevorzugt von aussen durch einen einfachen Handgriff aus dem Rastelement gelöst und die Deckplatte geöffnet werden.

Alternativ kann auf ein solches Federschloss auch verzichtet werden. Es ist dabei sowohl möglich, die Deckplatte mit einem andersartigen Schloss, beispielsweise einem herkömmlichen Vierkantschloss zu verschliessen als auch die Deckplatte durch Magnete oder andere Befestigungsmittel zu arretieren.

Bevorzugt ist das Federelement über ein der Federrast baugleiches Befestigungselement am Fahrzeugrahmen angebracht. Indem für die Federrast und das Befestigungselement gleiche Bauteile verwendet werden können, wird die Vorrichtung insgesamt flexibler, da weniger verschiedene Teile einzusetzen sind. Durch die somit vergrösserte Stückzahl werden die Herstellungskosten der einzelnen Stücke reduziert. Das Bauteil, welches als Federrast bzw. Befestigungselement dient, ist zudem derart ausgeführt, dass seine Position längs der Quer- oder Längsstrebe, an der es befestigt ist, einstellbar ist. Dadurch wird auch eine grosse Flexibilität hinsichtlich der gewünschten Anordnungen der einzelnen Elemente ermöglicht.

Alternativ kann auch für jedes der Elemente ein eigenes Teil eingesetzt werden. Es ist auch möglich, dass das Federelement direkt, also ohne ein separates Befestigungselement, an einem Teil des Fahrzeugrahmens angebracht ist.

Mit Vorteil wird die Deckplatte in einer offenen Position durch die Feststellvorrichtung gehalten. Die Feststellvorrichtung ist so konstruiert, dass sie dazu in der Lage ist, das Gewicht der Deckplatte in einer definiert verschwenkten und somit offenen Position der Deckplatte zu halten. Bei einer besonders schweren Deckplatte sind entsprechend mehrere Feststellvorrichtungen vorzusehen. Zwischen der offenen Position der Deckplatte und ihrer geschlossenen Position hat die Feststellvorrichtung, anders als eine der üblichen Gasdruckfedern, keine unterstützende Wirkung, sodass sie nur in der geöffneten Position einrastet.

Es ist auch möglich, dass die Feststellvorrichtung derart konstruiert ist, dass sie die Deckplatte in weiteren Positionen zu halten vermag, beispielsweise in einer weiteren verschwenkten, weniger geöffneten Position.

In einer bevorzugten Ausführungsform weist die untere Befestigung eine Auflagefläche auf, auf welcher das an der Deckplatte angebrachte Rastelement in der geschlossenen Position aufliegt, sodass weitgehend das gesamte Gewicht der Deckplatte von der unteren Befestigung aufgenommen wird. Eine solche Auflagefläche sorgt für zusätzliche Stabilität der Deckplatte und eine Entlastung des ansonsten das gesamte Gewicht der Deckplatte tragenden Gelenks der oberen Befestigung in ihrer geschlossenen Position. Da die Deckplatte möglichst leicht ausgeführt wird und trotz einer sehr dünnen Ausführung über keine Versteifungen verfügen muss, ist eine Stabilisierung der Deckplatte an deren Unterseite im geschlossenen Zustand besonders vorteilhaft.

Alternativ kann auf eine solche Auflagefläche auch verzichtet werden. Die Deckplatte kann an ihrer unteren Befestigung auch anders als durch eine Auflagefläche, beispielsweise durch Schrauben, Nieten, Stifte oder Klebeverbindungen befestigt und stabilisiert werden. Daneben ist auch denkbar, dass die Arretiervorrichtung selbst so ausgeführt sein kann, dass sie die Deckplatte zusätzlich stabilisiert. Zudem ist eine Stabilisierung durch eine Auflagefläche der unteren Befestigung auch derart möglich, dass nicht weitgehend das gesamte Gewicht der Deckplatte aufgenommen wird.

Mit Vorteil umfasst der Fahrzeugrahmen Dämpfungspuffer, welche als Anschlag für die Deckplatte in der geschlossenen Position dienen. Die Dämpfungspuffer werden bevorzugt an allen Auflageflächen zwischen der Deckplatte und dem Fahrzeugrahmen, insbesondere im Bereich der unteren Befestigung, aufgesetzt. Sie verhindern ein Klappern der Deckplatte und können für eine weitgehend spielfreie Befestigung der Deckplatte sorgen.

Auf die Dämpfungspuffer kann auch verzichtet werden. Die Deckplatte kann auch direkt auf dem Fahrzeugrahmen aufliegen.

In einer bevorzugten Ausführungsform beträgt die Gesamteinbautiefe der Seitenverkleidung höchstens 13 mm. Eine derartige Ausführungsform lässt sich problemlos mit dem CO-BOLT ® Fahrzeugrahmen zusammen verwenden. Die Gesamteinbautiefe bezeichnet dabei die Tiefe der Seitenverkleidung von der äusseren, also der dem Innern des Fahrzeugs abgewandten, Oberfläche der Deckplatte bis zu einem Teil der Seitenverkleidung, also beispielsweise einem Teil der oberen bzw. unteren Befestigung, der am weitesten in das Innere des Fahrzeugs hineinragt. Wenn diese Gesamteinbautiefe der Seitenverkleidung höchstens 13 mm beträgt, kann die Seitenverkleidung eine dünne, beispielsweise 3 mm starke, direkt auf dem Fahrzeugrahmen des CO-BOLT ® Systems aufliegende Deckplatte und eine Feststellvorrichtung umfassen, wobei die Feststellvorrichtung nicht über die Quer- oder Längsstreben des Fahrzeugrahmens in Richtung des Inneren des Fahrzeugs hinausragt. Somit kann die Stärke der Seitenwand möglichst klein gehalten werden. Sie ist durch die Breite des Fahrzeugrahmens beschränkt und muss durch die erfindungsgemässe Seitenverkleidung nicht vergrössert werden.

Alternativ kann die Gesamteinbautiefe der Seitenverkleidung auch grösser als 13 mm sein. Die Funktionen der einzelnen Elemente der Befestigungen und der Seitenverkleidung als Ganzes sind dadurch nicht beeinträchtigt.

Mit Vorteil ist in die Deckplatte ein Leuchtmittelgehäuse integriert, welches mit einer Oberfläche der Deckplatte abschliesst. Ein solches Leuchtmittelgehäuse ist beispielsweise zur Aufnahme von Leuchten zur seitlichen Begrenzungsmarkierung des Fahrzeugs geeignet. Das Gehäuse ragt dabei in Richtung des Innern des Fahrzeugs aus der Deckplatte hinaus und schliesst mit der äusseren Oberfläche der Deckplatte bündig ab oder ist in der äusseren Oberfläche der Deckplatte versenkt. Auf diese Weise ist auch im Bereich der Leuchten eine glatte Oberfläche der Seitenwand des Fahrzeugs gewährleistet, wodurch einerseits eine weitere Verletzungsgefahr ausgeschaltet ist und andererseits die Gefahr einer Beschädigung der Leuchte reduziert wird. Falls beispielsweise in Folge einer Kollision ein Leuchtmittelgehäuse beschädigt wurde, kann es zusammen mit der umgebenden Deckplatte einfach ausgetauscht werden.

Es kann auch auf ein solches Leuchtmittelgehäuse in der Deckplatte verzichtet werden. Daneben ist es auch möglich, dass ein Leuchtmittelgehäuse auf die Aussenfläche der Deckplatte aufgesetzt ist oder teilweise über die Aussenfläche der Deckplatte hinausragt. Es kann beispielsweise auch in die Deckplatte derart integriert sein, dass ein Teil des Leuchtmittelgehäuses in der Funktion eines Fahrtrichtungsanzeigers aus der Seitenfläche des Fahrzeugs herausragt.

Ein Omnibus mit einem Fahrzeugrahmen und einer daran befestigten erfindungsgemässen Seitenverkleidung weist eine sichere, pflege- und wartungsarme Seitenverkleidung auf und erzeugt damit nur relativ geringe Unterhaltskosten. Dabei kann die Seitenverkleidung, insbesondere die Befestigungsvorrichtungen der Deckplatten, derart im Fahrzeugrahmen untergebracht werden, dass einerseits am Rahmen keine wesentlichen baulichen Massnahmen erforderlich sind und andererseits keine Teile der Seitenverkleidung innenseitig über den Fahrzeugrahmen in den Fahrzeuginnenraum überstehen. Zudem liegen die Deckplatten bei geschlossener und oben sowie unten befestigter Seitenverkleidung weitgehend auf dem Fahrzeugrahmen auf (abgesehen von allenfalls vorhandenen Dämpfungselementen bzw. -beschichtungen zwischen Rahmen und Deckplatte), sodass auch ohne zusätzliche Verstrebungen der Deckplatten eine hinreichende Stabilität der Busaussenhaut gewährleistet ist. Insbesondere überdeckt die Seitenverkleidung dabei die im Bereich der Seitenverkleidung vorhandenen tragenden Elemente des Fahrzeugrahmens und trägt aufgrund der erfindungsgemässen Bauweise auf vorteilhafte Weise dazu bei, dass eine Aussenverkleidung des Busses eine weitgehend glatte Fläche mit geringer Verletzungsgefahr für andere Verkehrsteilnehmer bildet. Zudem erhält ein Omnibus mit einer erfindungsgemässen Seitenverkleidung einen maximierten und optimal nutzbaren Innenraum, ohne dabei seine Aussendimensionen im Vergleich zu herkömmlichen, nicht erfindungsgemässen Seitenverkleidungen zu vergrössern. Nicht zuletzt ermöglicht die Seitenverkleidung des Omnibusses auch eine ästhetische, ansprechende Gestaltung der Busaussenverkleidung. Erfindungsgemäss lässt sich ein Omnibus, welcher auf einem mit dem CO-BOLT ® System hergestellten Fahrzeugrahmen basiert, besonders gut mit der Seitenverkleidung ausrüsten, weil alle Komponenten der Seitenverkleidung auf das CO-BOLT ® System abgestimmt und zugeschnitten sind. Neben Omnibussen können selbstverständlich auch Schienenfahrzeuge oder andere Fahrzeuge mit einem entsprechenden Fahrzeugrahmen eine erfindungsgemässe Seitenverkleidung aufweisen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Seitenansicht einer erfindungsgemässen oberen Befestigung;
- Fig. 2: eine Seitenansicht einer erfindungsgemässen Seitenverkleidung mit der Deckplatte in der geöffneten und der geschlossenen Position;
- Fig. 3: eine Seitenansicht einer erfindungsgemässen oberen Befestigung mit der Deckplatte in der geöffneten und der geschlossenen Position; und
- Fig. 4: eine Vorderansicht auf einen Teil einer erfindungsgemässen Seitenverklei- dung.

Grundsätzlich sind in den Figuren gleiche Teile mit gleichen Bezugszeichen versehen.

### Wege zur Ausführung der Erfindung

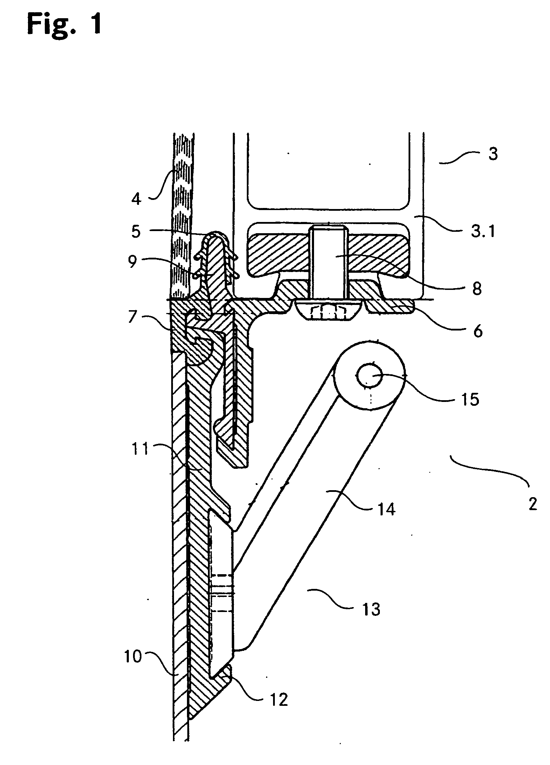

Die Figur 1 zeigt eine Seitenansicht einer erfindungsgemässen oberen Befestigung 2. Eine Querstrebe 3.1 eines CO-BOLT ® Fahrzeugrahmens 3 ist im oberen Teil der Figur im Querschnitt dargestellt. Auf der linken Seite der Figur ist die Aussenseite eines Fahrzeugs dargestellt. Sie wird im oberen Teil der Figur 1, seitlich neben der abgebildeten Querstrebe 3.1 durch eine Glasscheibe 4 gebildet, die via eine Dichtung 5 am Fahrzeugrahmen 3 angebracht ist. An der Querstrebe 3.1 ist in einem unteren Bereich eine Befestigung 6 für ein Foliengelenk 7 verankert. Die Befestigung 6 ist an der Querstrebe 3.1 durch eine dem CO-BOLT ® System typische Verankerung 8 angebracht. Die Befestigung 6 ist als rechtwinkliges Winkelstück ausgebildet. Sie hält einen Stabilisator 9 für das Foliengelenk 7, der teilweise in die Fuge zwischen der Glasscheibe 4 und dem Fahrzeugrahmen 3 als Unterstützung der Dichtung 5 eingreift.

Bündig unterhalb der Glasscheibe 4 fügt sich das Foliengelenk 7 an, welches aus einem Gummi besteht und gleichsam eine Dichtungsfunktion zwischen der Glasscheibe 4 und der Deckplatte 10 wahrnimmt. Die Deckplatte 10 schliesst sich ihrerseits bündig unterhalb an das Foliengelenk 7 an. Neben dem Stabilisator 9 für das U-förmig ausgebildete Foliengelenk 7, welcher teilweise in den durch das Foliengelenk 7 gebildeten Hohlraum eingreift befindet sich in diesem Hohlraum auch ein Teil einer ersten Schwalbenschwanzführung 11, welche auf die Deckplatte 10 aufgeklebt ist. Die erste Schwalbenschwanzführung 11 bildet somit ebenso eine Verbindung zwischen der Deckplatte 10 und dem Foliengelenk 7. Die Befestigung 6 des Foliengelenks 7 sowie dessen Stabilisator 9 bilden einen Anschlag für die erste Schwalbenschwanzführung 11, der parallel zur in ihrer geschlossenen Position befindlichen Deckplatte 10 verläuft. Auf der ersten Schwalbenschwanzführung 11 ist in einer schwalbenschwanzförmigen Schiene 12 ein Hebel 13 gehalten, welcher somit an der Deckplatte 10 befestigt ist.

Der Hebel 13 weist einen von der Deckplatte 10 abgewinkelt verlaufenden Schaft 14 auf, der an seinem der Deckplatte 10 gegenüberliegenden Ende eine kreisförmige Ausnehmung 15 auf. Der Hebel 13 mit der Ausnehmung 15 ist Teil eines Kniegelenks, welches in Figur 1 nicht vollständig dargestellt ist.

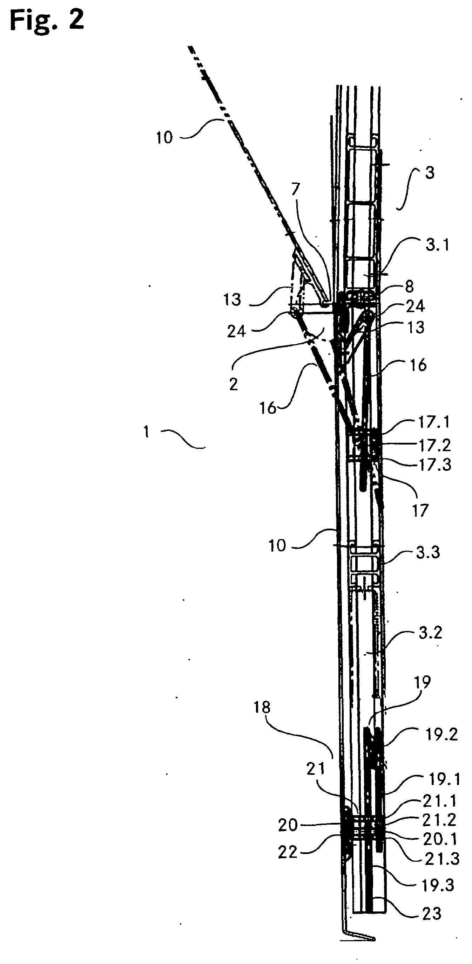

Die Figur 2 zeigt eine erfindungsgemässe Seitenverkleidung 1 in einer Seitenansicht, wobei hier die Deckplatte 10 sowohl in einer geschlossenen als auch in einer geöffneten (gestrichelt gezeichnet) Position abgebildet ist. Wie in Figur 1 schon dargestellt, befindet sich im oberen Teil der Figur 2 eine Querstrebe 3.1 eines Fahrzeugrahmens 3 an welche eine Glasscheibe 4 angebracht ist. Unterhalb der Glasscheibe schliesst das Foliengelenk 7 an, welches in der oben beschriebenen Art an der Querstrebe 3.1 befestigt ist.

Die Deckplatte 10 wird in Figur 2 zum einen in ihrer geschlossenen Position dargestellt. In dieser Position, welche der Stellung der Deckplatte 10 aus Figur 1 entspricht, verläuft die Deckplatte 10 in der gleichen Ebene wie die Glasscheibe 4, und bildet damit die äussere Seitenfläche des Fahrzeugs. An den aus Kunststoff gefertigten Hebel 13, welcher in der oben beschriebenen Weise mit der Deckplatte 10 verbunden ist, schliesst ein metallischer Federbügel 16 an. Der Federbügel 16 bildet mit dem Hebel 13 ein Kniegelenk, dessen Drehachse 24 in der kreisförmigen Ausnehmung 15 des Hebels liegt. Ein im Wesentlichen waagerecht verlaufender Teil des Federbügels 16 durchstösst diese kreisförmige Ausnehmung 15, wodurch der Hebel 13 um die durch den waagerechten Teil des Federbügels 16 gebildete Drehachse 24 schwenkbar ist.

Der Federbügel 16 verläuft in der geschlossenen Position der Deckplatte 10 im Wesentlichen vertikal und wird in einer Federrast 17 gehalten. Die Federrast 17 ist aus Kunststoff gefertigt und seitlich an einer Längsstrebe 3.2 des Fahrzeugrahmens 3 etwas unterhalb der Position des an der Deckplatte 10 befestigten Hebels 13 verankert. Die Federrast 17 umfasst zwei im Wesentlichen horizontal ausgerichtete Flächen 17.1, 17.3 mit Führungen für den Federbügel 16. Über einen senkrecht verlaufenden, die beiden horizontalen Flächen verbindendes Verbindungsstück 17.2 der Federrast 17 ist diese an der Längsstrebe 3.2 verankert.

Weiter unterhalb der Federrast 17 befindet sich eine zweite Querstrebe 3.3, welche parallel zur Querstrebe 3.1 zwischen zwei Längsstreben verläuft. Der Fahrzeugrahmen 3 umfasst eine Vielzahl solcher Quer- und Längsstreben. Sie bilden ein Gerüst für die gesamte Verkleidung des Fahrzeugs.

Wiederum unterhalb der zweiten Querstrebe 3.3 ist die untere Befestigung 18 dargestellt. Die untere Befestigung 18 umfasst ein Federschloss mit einer Feder 19 und einem Rastelement 20. Die Feder 19 wird durch einen gebogenen metallischen Bügel gebildet. Der Bügel verläuft dabei zunächst gerade und bildet somit einen ersten Federschenkel 19.1. An den ersten Federschenkel 19.1 schliesst ein schraubenförmig gebogener Teil 19.2 des metallischen Bügels an. Der Bügel verläuft dabei entlang eineinhalb kreisförmiger Windungen und mündet anschliessend in einen zweiten Federschenkel 19.3, der durch einen wiederum gerade verlaufenden Teil des metallischen Bügels gebildet wird. Durch die mechanische Elastizität des Bügels im gebogenen Teil 19.2 der Feder können die beiden Federschenkel 19.1, 19.3 transversal gegeneinander bewegt werden. Dabei führen sie eine Schwenkbewegung aus, welche im Wesentlichen um eine Achse im Mittelpunkt des gebogenen Teils 19.2 der Feder verläuft. Die Federschenkel 19.1, 19.3 können also mit einem Kraftaufwand gegeneinander gedrückt werden, die Federkraft wirkt dann zurück in Richtung der Ruhelage der Federschenkel 19.1, 19.3.

Der erste Federschenkel 19.1 ist an der Längsstrebe 3.2 des Fahrzeugrahmens 3 befestigt. Die Befestigung der Feder 19 wird dabei durch ein der Federrast 17 ähnelndes Befestigungselement 21 realisiert. Das Befestigungselement 21 ist an der Längsstrebe 3.2 des Fahrzeugrahmens 3 verankert und umfasst zwei horizontal ausgerichtete Flächen 21.1, 21.3, welche durch ein vertikales Verbindungsstück 21.2, über das das Befestigungselement 21 am Fahrzeugrahmen 3 verankert ist, miteinander verbunden sind.

Die Deckplatte 10 weist im Bereich ihres unteren, dem Foliengelenk 7 gegenüberliegenden Endes eine zweite Schwalbenschwanzführung 22 auf, welche auf die Deckplatte 10 aufgeklebt ist. Die zweite Schwalbenschwanzführung 22 dient der Befestigung des Rastelements 20 auf der Deckplatte 10. Das Rastelement 20 ist dabei durch einen in der zweiten Schwalbenschwanzführung 22 befestigten Steg 20.1 gebildet, welcher senkrecht auf der Deckplatte 10 steht. Der Steg 20.1 bildet dabei einen Widerhaken, in den der zweite Federschenkel 19.3 in der geschlossenen Position der Deckplatte 10 einrastet. Somit ist die Arretiervorrichtung durch das Zusammenwirken der Feder 19 und des Rastelements 20 gebildet. Weiter bildet der Steg 20.1 auch eine Auflage, welche auf dem Befestigungselement 21 in der geschlossenen Position zu liegen kommt. Das Befestigungselement 21 bildet damit eine Auflagefläche für das Rastelement 20, welche die Deckplatte 10 in der geschlossenen Position stabilisiert.

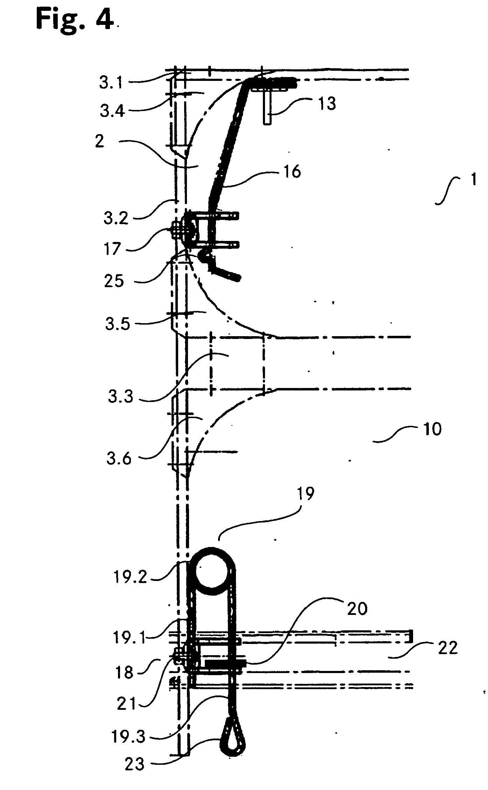

Die Deckplatte 10 weist an ihrem unteren Ende einen nach innen abgebogenen Teil auf, der sich um das untere Ende des Fahrzeugrahmens 3 biegt. Zum Öffnen der Arretiervorrichtung kann der hinter der Deckplatte 10 befindliche zweite Federschenkel 19.3 der Feder 19 auf den ersten Federschenkel 19.1 zu bewegt und das Rastelement 20 damit freigegeben werden. Um den Öffnungsvorgang zu erleichtern weist der zweite Federschenkel 19.3 daher eine Fingeröse 23 auf, welche in Figur 4 deutlicher zu erkennen ist.

Bei häufig zu öffnenden Deckplatten 10 der Seitenverkleidung 1 kann alternativ vorgesehen sein, dass der zweite Federschenkel 19.3 verlängert ist und unter der Deckplatte 10 hervorragt. In einer solchen Ausführungsform wäre die Deckplatte 10 an ihrem unteren Ende nicht wie in Figur 2 dargestellt umgeklappt, um ein ungestörtes Bewegen des zweiten Federschenkels 19.3 zu erlauben. Der zweite Federschenkel 19.3 könnte somit bewegt werden, ohne dass hinter die Deckplatte 10 gegriffen werden muss.

Die geöffnete Deckplatte 10 ist zusammen mit den entsprechend positionierten Elementen gestrichelt dargestellt. Die Deckplatte 10 weist einen grossen Öffnungswinkel zwischen der geschlossenen und der geöffneten Position auf. Der Hebel 13 steht in diesem Öffnungswinkel im Wesentlichen vertikal und damit parallel zur Längsstrebe 3.2 des Fahrzeugrahmens 3. Das am Ende des Hebels 13 gebildete Kniegelenk zwischen dem Hebel 13 und dem Federbügel 16 befindet sich hinter seinem Totpunkt. Der Federbügel 16 ist in der hier gestrichelt dargestellten Situation in der Federrast 17 eingerastet, sodass die Feststellvorrichtung die Deckplatte 10 hält. Die Ausrichtung des Federbügels 16 in seiner eingerasteten Position ist derart, dass eine am Kniegelenk vom Hebel 13 auf den Federbügel 16 wirkende Kraft im Wesentlichen in Längsrichtung des Federbügels 16 gerichtet ist. Die Längsrichtung des Federbügels 16 verläuft somit im Wesentlichen senkrecht zur Verbindungslinie zwischen der Ausnehmung 15 im Hebel 13, durch welche die Drehachse 24 des Kniegelenks verläuft und dem Drehpunkt des Foliengelenks 7.

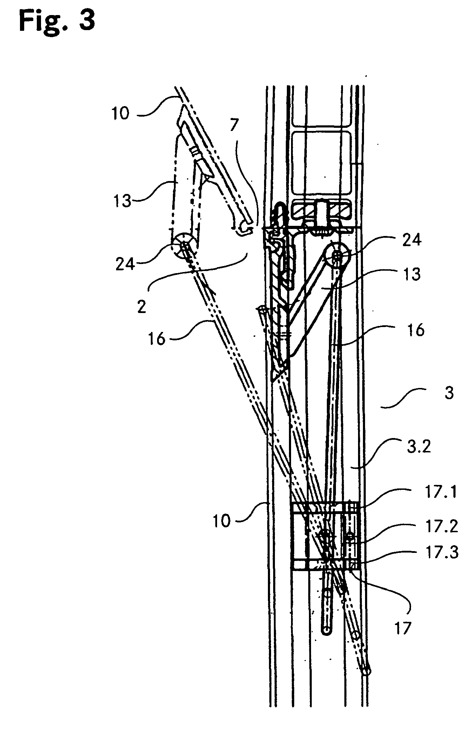

Figur 3 zeigt einen Ausschnitt aus der in Figur 2 dargestellten Seitenverkleidung 1 im Bereich der oberen Befestigung 2. In dieser Figur 3 ist die gegenseitige Lage der Drehachse 24 des Kniegelenks und des Drehpunkts des Foliengelenks 7 deutlicher zu erkennen. Wie in Figur 2 ist die Deckplatte 10 in einer geschlossenen Position dargestellt. Das Kniegelenk zwischen dem Hebel 13 und dem Federbügel 16 ist in seinem zusammengeklappten Zustand. Der Hebel 13 ragt dabei in Richtung des Inneren des Fahrzeugs nicht über den Fahrzeugrahmen 3 hinaus. Der Federbügel 16 verbindet das Kniegelenk und die Federrast 17 und nimmt in der geschlossenen Position keine Kraft auf.

In der geöffneten Position der Deckplatte 10, welche in Figur 3 wie schon in Figur 2 gestrichelt dargestellt ist, ist die Deckplatte 10 um einen Öffnungswinkel von deutlich über 90° und unter 180°, nämlich von 153.3° geöffnet. Der Hebel 13, der an der Deckplatte 10 befestigt ist, verläuft unter diesem Öffnungswinkel im Wesentlichen vertikal, sodass sich das Kniegelenk, ausgehend von seiner zusammengeklappten Position, hinter einem Totpunkt befindet, in welchem die Ausrichtung des Hebels 13 und die Ausrichtung des Federbügels 16 im Wesentlichen parallel sind. Das Kniegelenk nähert sich beim Öffnungsvorgang also von seiner zusammengeklappten Position aus dem Totpunkt, erreicht und überschreitet ihn, so dass es sich in der geöffneten Position hinter dem Totpunkt befindet. Eine virtuelle Verbindungslinie zwischen dem Drehpunkt des Foliengelenks 7 und der Drehachse 24 des Kniegelenks verläuft in dieser geöffneten Position im Wesentlichen senkrecht zur Ausrichtung des Federbügels 16. Der Federbügel 16 nimmt die vom Gewicht der Deckplatte 10 via den Hebel 13 auf den Federbügel 16 wirkende Kraft daher im Wesentlichen in longitudinaler Richtung auf. Gleichbedeutend mit der Stellung des Federbügels 16 senkrecht zur Verbindungslinie zwischen dem Drehpunkt des Foliengelenks 7 und der Drehachse 24 des Kniegelenks ist die Beschreibung, dass die Ausrichtung des Federbügels 16 tangential an die kreisbahnförmige Trajektorie der Drehachse 24 des Kniegelenks um den Drehpunkt des Foliengelenks 7 beim Öffnen oder Schliessen der Deckplatte 10 anliegt.

Der Federbügel 16 ist in der geöffneten Position der Deckplatte 10 in der Federrast 17 eingerastet. Da sich der Federbügel 16 in dieser eingerasteten Position nicht verschieben lässt, ist die Deckplatte 10 somit durch die Feststellvorrichtung arretiert.

Figur 4 zeigt eine Vorderansicht auf einen Teil einer erfindungsgemässen Seitenverkleidung 1. Am linken Rand der Figur 4 ist ein Teil der vertikal verlaufenden Längsstrebe 3.2 eines Fahrzeugrahmens 3 abgebildet. An der Längsstrebe 3.2 ist die Federrast 17 der oberen Befestigung 2 sowie das Befestigungselement 21 der unteren Befestigung in oben beschriebener Weise verankert. Die Federrast 17 führt wie ebenfalls oben beschrieben den Federbügel 16, welcher mit dem Hebel 13 ein Kniegelenk bildet. In Figur 4 ist eine U-förmige Ausbeulung 25 des Federbügels 16 dargestellt, welche als Raste mit der Federrast 17 zusammen wirkt. Wenn die Ausbeulung 25 in der Federrast 17 einrastet, ist der Federbügel 16 longitudinal fixiert.

Im unteren Teil der Figur 4 ist die untere Befestigung 18 abgebildet mit der Feder 19, dem Befestigungselement 21 und dem Rastelement 20, welches mittels der zweiten Schwalbenschwanzführung 22 auf der Deckplatte 10 angebracht ist, wie oben bereits beschrieben. In dieser Figur 4 ist die Fingeröse 23 klar zu erkennen. In dieser Ansicht wird der zweite Federschenkel 19.3, der mit der Fingeröse 23 versehen ist, nach links bewegt, um die Feder 19 aus dem Rastelement 20 auf der Deckplatte 10 zu lösen.

Figur 4 zeigt des Weiteren die auch in vorher beschriebenen Figuren dargestellten Querstreben 3.1, 3.3 des Fahrzeugrahmens 3, welche senkrecht zur Längsstrebe 3.2 verlaufen. Die Querstreben 3.1, 3.3 sind mit der Längsstrebe 3.2 über Eckstücke 3.4...3.6 verbunden, welche für eine hohe Stabilität des Fahrzeugrahmens 3 sorgen.

Zusammenfassend ist festzustellen, dass durch die Erfindung eine ästhetische Seitenverkleidung für ein Fahrzeug geschaffen wurde, welche zusammen mit einer Seitenfensterfront eine glatte Aussenfläche des Fahrzeugs bildet und eine sehr geringe Einbautiefe aufweist. Durch die modular austauschbare und die öffenbare Ausführung der Seitenverkleidung ist diese zusätzlich besonders bedienungsfreundlich und alltagstauglich.

## Patentansprüche

1. Modular austauschbare Seitenverkleidung (1) für ein Fahrzeug, insbesondere für einen Omnibus, umfassend eine verschwenkbare Deckplatte (10), welche mittels einer oberen und einer unteren Befestigung (2, 18) mit einem Fahrzeugrahmen (3) verbunden ist, wobei die obere Befestigung (2) ein Gelenk (7), insbesondere ein Foliengelenk (7), umfasst und weiter eine Feststellvorrichtung des Gelenks (7) vorhanden ist und die untere Befestigung (18) eine lösbare Arretiervorrichtung umfasst, wobei die Deckplatte (10) in einer geschlossenen Position von der oberen und der unteren Befestigung gehalten ist, **dadurch gekennzeichnet, dass** die Feststellvorrichtung einen an der Deckplatte (10) angebrachten Hebel (13) mit einem daran angelenkten Federbügel (16) umfasst, wobei Hebel (13) und Bügel (16) zusammen ein Gelenkknie bilden und weiter eine Federrast (17) vorhanden ist, derart, dass sich das Gelenkknie bei in einen vorgegebenen Winkel verschwenkter Deckplatte (10) hinter einem Totpunkt befindet und dabei der Federbügel (16) in der Federrast (17) verrastet ist, so dass die Deckplatte (10) im vorgegebenen Winkel festgestellt ist.

2. Seitenverkleidung (1) nach Anspruch 1, **dadurch gekennzeichnet, dass** der Hebel (13) eine Sollbruchstelle aufweist.

3. Seitenverkleidung (1) nach Anspruch 1 oder 2, **dadurch gekennzeichnet, dass** der Hebel (13) und/oder die Federrast (17) aus Kunststoff gefertigt sind/ist.

4. Seitenverkleidung (1) nach einem der Ansprüche 1 bis 3, **dadurch gekennzeichnet, dass** der Hebel (13) über eine Schwalbenschwanzführung (11) auf der Deckplatte (10) angebracht ist.

5. Seitenverkleidung (1) nach einem der Ansprüche 1 bis 4, **dadurch gekennzeichnet, dass** die Federrast (17) unmittelbar am Fahrzeugrahmen (3) befestigt ist.

6. Seitenverkleidung (1) nach einem der Ansprüche 1 bis 5, **dadurch gekennzeichnet, dass** die Arretiervorrichtung ein Federschloss umfasst, wobei das Federschloss ein am Fahrzeugrahmen (3) angebrachtes Federelement (19) und ein an der Deckplatte (10) angebrachtes Rastelement (20) aufweist.

7. Seitenverkleidung (1) nach Anspruch 6, **dadurch gekennzeichnet, dass** das Federelement (19) über ein der Federrast (17) baugleiches Befestigungselement (21) am Fahrzeugrahmen angebracht ist.

8. Seitenverkleidung (1) nach einem der Ansprüche 1 bis 7, **dadurch gekennzeichnet, dass** die Deckplatte (10) in einer offenen Position im Wesentlichen von der Feststellvorrichtung gehalten ist.

9. Seitenverkleidung (1) nach Anspruch 6 oder 7, **dadurch gekennzeichnet, dass** die untere Befestigung (18) eine Auflagefläche aufweist, auf welcher das an der Deckplatte (10) angebrachte Rastelement (20) in der geschlossenen Position aufliegt, sodass weitgehend das gesamte Gewicht der Deckplatte (10) von der unteren Befestigung (18) aufgenommen wird.

10. Seitenverkleidung (1) nach einem der Ansprüche 1 bis 9, **dadurch gekennzeichnet, dass** der Fahrzeugrahmen (3) Dämpfungspuffer umfasst, welche als Anschlag für die Deckplatte (10) in der geschlossenen Position dienen.

11. Seitenverkleidung (1) nach einem der Ansprüche 1 bis 10, **dadurch gekennzeichnet, dass** die Gesamteinbautiefe der Seitenverkleidung (1) höchstens 13 mm beträgt.

12. Seitenverkleidung (1) nach einem der Ansprüche 1 bis 11, **dadurch gekennzeichnet, dass** in die Deckplatte (10) ein Leuchtmittelgehäuse integriert ist, welches mit einer Oberfläche der Deckplatte (10) abschliesst.

13. Omnibus mit einem Fahrzeugrahmen (3) und einer daran befestigten Seitenverkleidung (1) nach einem der Ansprüche 1 bis 12.

## Claims

1. Modular, replaceable side panel (1) for a vehicle, in particular for an omnibus, comprising a pivotable cover plate (10) which is connected to a vehicle chassis (3) by means of an upper fastening and a lower fastening (2, 18), the upper fastening (2) comprising a joint (7), in particular a film hinge (7) and a securing device of the joint (7) also being present and the lower fastening (18) comprising a releasable locking device, the cover plate (10) being held in a closed position by the upper fastening and the lower fastening, **characterized in that** the securing device comprises a lever (13) attached to the cover plate (10) with a spring clip (16) articulated thereto, the lever (13) and clip (16) together forming a toggle joint, and a spring catch (17) also being present such that the toggle joint, with the cover plate (10) pivoted at a predetermined angle, is located behind a dead center position and at the same time the spring clip (16) is engaged in the spring catch (17) so that the cover plate (10) is secured at a predetermined angle.

2. Side panel (1) according to Claim 1, **characterized in that** the lever (13) has a predetermined breaking point.

3. Side panel (1) according to Claim 1 or 2, **characterized in that** the lever (13) and/or the spring catch (17) are/is made from plastics.

4. Side panel (1) according to one of Claims 1 to 3, **characterized in that** the lever (13) is attached to the cover plate (10) via a dovetail guide (11).

5. Side panel (1) according to one of Claims 1 to 4, **characterized in that** the spring catch (17) is directly fastened to the vehicle chassis (3) .

6. Side panel (1) according to one of Claims 1 to 5, **characterized in that** the locking device comprises a spring lock, the spring lock comprising a spring element (19) attached to the vehicle chassis (3) and a latching element (20) attached to the cover plate (10).

7. Side panel (1) according to Claim 6, **characterized in that** the spring element (19) is attached to the vehicle chassis via a fastening element (21) of similar construction to the spring catch (17).

8. Side panel (1) according to one of Claims 1 to 7, **characterized in that** the cover plate (10) is held in an open position substantially by the securing device.

9. Side panel (1) according to Claim 6 or 7, **characterized in that** the lower fastening (18) has a bearing surface on which the latching element (20) attached to the cover plate (10) bears in the closed position, so that substantially the entire weight of the cover plate (10) is absorbed by the lower fastening (18).

10. Side panel (1) according to one of Claims 1 to 9, **characterized in that** the vehicle chassis (3) comprises damping buffers which serve as a stop for the cover plate (10) in the closed position.

11. Side panel (1) according to one of Claims 1 to 10, **characterized in that** the entire installation depth of the side panel (1) is at most 13 mm.

12. Side panel (1) according to one of Claims 1 to 11, **characterized in that** a lamp housing is incorporated in the cover plate (10) which terminates with a surface of the cover plate (10).

13. Omnibus comprising a vehicle chassis (3) and a side panel (1) fastened thereto according to one of Claims 1 to 12.

## Revendications

1. Habillage latéral modulaire interchangeable (1) pour un véhicule, en particulier pour un omnibus, comprenant une plaque de recouvrement pivotante (10), qui est connectée au moyen d'une fixation supérieure et d'une fixation inférieure (2, 18) à un châssis de véhicule (3), la fixation supérieure (2) comprenant une articulation (7), notamment une articulation à film (7), et un dispositif de fixation de l'articulation (7) étant en outre prévu, et la fixation inférieure (18) comprenant un dispositif de blocage desserrable, la plaque de recouvrement (10) étant maintenue dans une position fermée par la fixation supérieure et la fixation inférieure, **caractérisé en ce que** le dispositif de fixation comprend un levier (13) monté sur la plaque de recouvrement (10), avec un étrier à ressort (16) articulé à celui-ci, le levier (13) et l'étrier (16) formant ensemble une genouillère articulée et un encliquetage à ressort (17) étant en outre prévu, de telle sorte que la genouillère articulée se trouve derrière un point mort lorsque la plaque de recouvrement (10) est pivotée suivant un angle prédéfini, et en l'occurrence l'étrier à ressort (16) est encliqueté dans l'encliquetage à ressort (17), de telle sorte que la plaque de recouvrement (10) soit fixée dans cette position angulaire prédéfinie.

2. Habillage latéral (1) selon la revendication 1, **caractérisé en ce que** le levier (13) présente un point destiné à la rupture.

3. Habillage latéral (1) selon la revendication 1 ou 2, **caractérisé en ce que** le levier (13) et/ou l'encliquetage à ressort (17) sont fabriqués en plastique.

4. Habillage latéral (1) selon l'une quelconque des revendications 1 à 3, **caractérisé en ce que** le levier (13) est monté sur la plaque de recouvrement (10) par le biais d'un guidage en queue d'aronde (11).

5. Habillage latéral (1) selon l'une quelconque des revendications 1 à 4, **caractérisé en ce que** l'encliquetage à ressort (17) est fixé directement sur le châssis du véhicule (3).

6. Habillage latéral (1) selon l'une quelconque des revendications 1 à 5, **caractérisé en ce que** le dispositif de blocage comprend une serrure à ressort, la serrure à ressort présentant un élément de ressort (19) monté sur le châssis du véhicule (3) et un élément d'encliquetage (20) monté sur la plaque de recouvrement (10).

7. Habillage latéral (1) selon la revendication 6, **caractérisé en ce que** l'élément de ressort (19) est monté sur le châssis du véhicule par le biais d'un élément de fixation (21) de même construction que l'encliquetage à ressort (17).

8. Habillage latéral (1) selon l'une quelconque des revendications 1 à 7, **caractérisé en ce que** la plaque de recouvrement (10) est maintenue dans une position ouverte essentiellement par le dispositif de fixation.

9. Habillage latéral (1) selon la revendication 6 ou 7, **caractérisé en ce que** la fixation inférieure (18) présente une surface d'appui sur laquelle repose l'élément d'encliquetage (20) monté sur la plaque de recouvrement (10) dans la position fermée, de sorte que sensiblement tout le poids de la plaque de recouvrement (10) soit reçu par la fixation inférieure (18).

10. Habillage latéral (1) selon l'une quelconque des revendications 1 à 9, **caractérisé en ce que** le châssis du véhicule (3) comprend des tampons amortisseurs qui servent de butée pour la plaque de recouvrement (10) dans la position fermée.

11. Habillage latéral (1) selon l'une quelconque des revendications 1 à 10, **caractérisé en ce que** la profondeur de construction totale de l'habillage latéral (1) est de 13 mm au maximum.

12. Habillage latéral (1) selon l'une quelconque des revendications 1 à 11, **caractérisé en ce que** l'on intègre dans la plaque de recouvrement (10) un boîtier d'éclairage, qui se termine avec une surface de la plaque de recouvrement (10).

13. Omnibus comprenant un châssis de véhicule (3) et un habillage latéral (1) fixé sur celui-ci, selon l'une quelconque des revendications 1 à 12.
